# EUROPÄISCHE PATENTSCHRIFT

(11) **EP 0 468 179 B1**
(45) Veröffentlichungstag und Bekanntmachung des Hinweises auf die Patenterteilung: **15.04.1998**
(21) Anmeldenummer: 91109476.1
(22) Anmeldetag: 10.06.1991
(51) Int. Cl.: G06K 7/06, G06K 7/00, G06K 13/08

(54) **Vorrichtung zur Aufnahme von Wertkarten**
Apparatus for processing credit cards
Dispositif pour le traitement de cartes de crédit

(30) Priorität: 23.07.1990 CH 2436/90
(43) Veröffentlichungstag der Anmeldung: 29.01.1992
(73) Patentinhaber: Landis & Gyr Technology Innovation AG, 6301 Zug (CH)
(72) Erfinder: Bernd, Deneke, W-6450 Hanau (DE)
(74) Vertreter: Müller, Hans-Jürgen, Dipl.-Ing.

(56) Entgegenhaltungen:
- EP-A- 167 356
- EP-A- 236 846
- FR-A- 2 599 530
- FR-A- 2 633 754
- FR-A- 2 638 005

## Beschreibung

Die Erfindung bezieht sich auf eine Vorrichtung zur Aufnahme von Wertkarten gemäss dem Oberbegriff des Anspruchs 1.

Es ist eine Vorrichtung dieser Art bekannt (DE-OS 3 916 812), bei der eine Kartenaufnahme in einem Gehäuse verschiebbar angeordnet ist. In einer ersten Endstellung kann eine Wertkarte durch einen im Gehäuse angeordneten Einführschlitz in die Kartenaufnahme eingeschoben werden. Durch das manuelle Betätigen eines Drehschiebers wird die Kartenaufnahme in eine zweite Endstellung bewegt. Noch bevor die zweite Endstellung ganz erreicht ist, wird durch den Drehschieber einerseits der Einführschlitz verschlossen und andererseits wird ein Kontaktträger derart bewegt, dass die darauf angeordneten Kontaktelemente mit den Kontaktbahnen der Wertkarte verbunden werden.

Es ist eine weitere Vorrichtung bekannt (DE-OS 3 916 783), bei der in einem Gehäuse eine Schublade angeordnet ist, die von einer ersten Endstellung manuell in eine zweite Endstellung verschiebbar ist. In der ersten Endstellung kann eine Wertkarte in die Schublade eingelegt werden. In der zweiten Endstellung ist die Wertkarte an eine Lese- und Schreibvorrichtung angeschlossen. Noch bevor die Schublade die zweite Endstellung ganz erreicht hat, wird durch die Schublade ein Kontaktträger derart bewegt, dass die darauf angeordneten Kontaktelemente mit den Kontaktbahnen der Wertkarte verbunden werden.

Es ist ebenfalls eine Vorrichtung bekannt (EP 0 167 356), bei der in eine in einem Gehäuse angeordnete Kartenaufnahme eine Karte einführbar ist, wodurch die Kartenaufnahme mit der Karte von einer ersten Endstellung manuell in eine zweite Endstellung verschiebbar ist. In der ersten Endstellung kann eine Karte in die Schublade eingelegt werden. In der zweiten Endstellung ist die Karte an eine Lese- und Schreibvorrichtung angeschlossen und wird durch einen an einem Verriegelungsbügel angebrachten Haken verriegelt. Der Verriegelungsbügel ist an einen von der Kartenaufnahme betätigten Hebelmechanismus angeschlossen und bewegt den Haken in die Verriegelungsposition, wenn die zweite Endstellung erreicht ist.

Der Erfindung liegt die Aufgabe zugrunde, eine Vorrichtung zur Aufnahme von Wertkarten zu schaffen, die einfach und damit kostengünstig aufgebaut ist.

Dabei sollen die Wertkarten schonend und sicher ein- und ausgeführt und zuverlässig verriegelt werden können. Während des Ein- und Ausführvorganges und durch den Verriegelungsmechanismus sollen Kräfte auf und Beschädigungen an der Karte vermieden werden.

Die Erfindung besteht in den Merkmalen des Anspruchs 1. Vorteilhafte Ausgestaltungen ergeben sich aus den Unteransprüchen.

Nachfolgend wird ein Ausführungsbeispiel der Erfindung anhand der Zeichnung näher erläutert.

Es zeigen:
- Fig. 1: eine Seitenansicht einer Vorrichtung in der zum Einlegen und Entnehmen von Wertkarten geeigneten Stellung,
- Fig. 2: eine Seitenansicht der Vorrichtung in der Stellung, in der die Wertkarte gelesen und beschrieben werden kann,
- Fig. 3: eine Draufsicht auf die Vorrichtung in der Stellung nach der Fig. 2,
- Fig. 4: eine manuell bedienbare Verriegelungseinrichtung und
- Fig. 5: eine Ausführungsform einer Kontaktierungsvorrichtung.

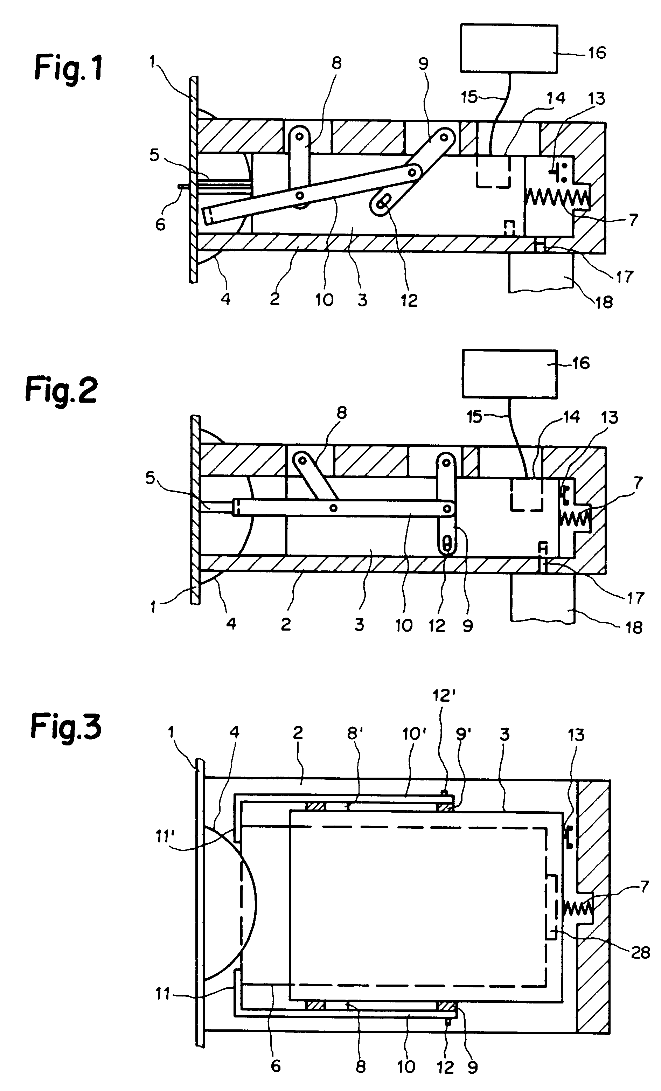

In den Fig. 1, 2 und 3 bedeutet 1 eine Frontplatte einer Vorrichtung zur Aufnahme von Wertkarten. An die Frontplatte 1 schliesst ein Gehäuse 2 an, das als Führung für eine Kartenaufnahme 3 dient. Die Kartenaufnahme 3 ist von einer ersten Endstellung (Fig. 1) in eine zweite Endstellung (Fig. 2 und 3) verschiebbar. In der Frontplatte 1 ist eine kugelsegmentförmige Vertiefung 4 eingeprägt, in der ein Einführschlitz 5 für Wertkarten 6 angeordnet ist, die beispielsweise einen elektronischen Schaltkreis enthalten. Der Einführschlitz 5 überragt die Vertiefung 4 beidseitig. Die Vertiefung 4 dient als Griffmulde für die Wertkarte 6. Die Wertkarte 6 ist in der Kartenaufnahme 3 allseitig geführt, wobei ein Anschlag 28 die Einführtiefe begrenzt. Eine Druckfeder 7 ist zwischen dem Gehäuse 2 und der Kartenaufnahme 3 derart angeordnet, dass die Kartenaufnahme 3 nach vorne, d.h. gegen die Frontplatte 1 gedrückt wird.

Auf der einen Seite der Kartenaufnahme 3 sind am Gehäuse 2 je ein erster Hebel 8 und ein zweiter Hebel 9 drehbar angeordnet. Ein Verriegelungsbügel 10 verbindet die beiden Hebel 8, 9 derart, dass ein bewegliches erstes Hebelsystem entsteht. Der Verriegelungsbügel 10 ist über die Kartenaufnahme 3 hinaus in der Richtung zur Frontplatte 1 hin verlängert und gegen die Vertiefung 4 hin abgewinkelt. Der Verriegelungsbügel 10 endet in einem Haken 11. In der ersten Endstellung befindet sich der Haken 11 unmittelbar hinter der Frontplatte 1 seitlich der Vertiefung 4 und unterhalb des Einführschlitzes 5. Auf der anderen Seite der Kartenaufnahme 3 ist ein zweites Hebelsystem angeordnet, das aus zwei Hebeln 8', 9' und einem Verriegelungsbügel 10' besteht und zum ersten Hebelsystem symmetrisch ist. Die Punkte, in denen die Verriegelungsbügel 10 und 10' im Hebel 8 bzw. 8' und 9 bzw. 9' angelenkt sind, sind so gewählt, dass in der ersten Endstellung die beiden Verriegelungsbügel 10, 10' schräg nach unten geneigt sind, so dass die Haken 11, 11' die durch die Wertkarte 4 gebildete Kartenebene untergreifen. In den Hebeln 9, 9' ist ein Schlitz angeordnet, in die je ein in der Kartenaufnahme 3 angeordneter Mitnehmerstift 12 bzw. 12' eingreift.

In der Kartenaufnahme 3 ist eine Kontaktierungsvorrichtung 14 angeordnet, die mit einem flexiblen Kabel 15, beispielsweise mit einem mehradrigen Bandkabel, mit einem Steuergerät 16 verbunden ist. Das Steuergerät 16 enthält alle Schaltkreise, die für die Ueberwachung der Vorrichtung und für das Lesen und Beschreiben von Wertkarten 6 notwendig sind. Ein Stössel 17, der in ein in der Kartenaufnahme 3 angeordnetes Loch eingreift und von einem Elektromagneten 18 bewegbar ist, bildet eine Arretierungsvorrichtung, die die Kartenaufnahme 3 in der zweiten Endstellung festhält. Ein von der Kartenaufnahme 3 gesteuerter Schalter 13 ist in der ersten Endstellung offen und in der zweiten Endstellung geschlossen. Der Schalter 13 ist durch nicht gezeichnete Kabel mit dem Steuergerät 16 verbunden.

In der ersten Endstellung ist die Vorrichtung zur Aufnahme einer Wertkarte 6 bereit. Die Kartenaufnahme 3 ist ganz nach vorne, d.h. zur Frontplatte 1 hin verschoben. Noch bevor die Wertkarte 6 ganz in die Kartenaufnahme 3 eingeschoben ist, kommt sie mit der Kontaktierungsvorrichtung 14 in Kontakt. Beim weiteren Einschieben kommt die Wertkarte 6 am Anschlag 28 zum Anliegen, worauf die Kartenaufnahme 4 in der Einschubrichtung der Wertkarte 6 entgegen der Kraft der Druckfeder 7 mitbewegt wird. Die Hebel 9, 9' und damit beide Hebelsysteme werden von den in der Kartenaufnahme 6 angeordneten Mitnehmerstiften 12, 12' mitbewegt. Die an den Verriegelungsbügeln 10, 10' angeordneten Haken 11, 11' beschreiben dabei eine bogenförmige Bewegung von unterhalb der Kartenebene gegen die Kartenebene zu. Noch bevor die Wertkarte 6 und damit die Kartenaufnahme 3 ihre Endstellung ganz erreicht haben, greifen die Haken 11, 11' hinter der Wertkarte 6 in die Kartenebene ein. In der zweiten Endstellung hinterfassen die Haken 11, 11' die Wertkarte 6, so dass diese der Vorrichtung nicht mehr entnommen werden kann, obwohl sie für den Benutzer noch sicht- und greifbar ist.

Kurz vor dem Erreichen der zweiten Endstellung schliesst der Schalter 13. Das Steuergerät 16 erregt darauf den Elektromagneten 18, der den Stössel 17 so weit anhebt, dass er die Kartenaufnahme 3 in der zweiten Endstellung festhält, und gibt gleichzeitig einen Lese- und Schreibvorgang frei. Nach der Beendigung des Lese- und Schreibvorganges wird der Elektromagnet 18 vom Steuergerät 16 ausgeschaltet. Damit wird die Kartenaufnahme 3 freigegeben. Die Druckfeder 7 bewegt die Kartenaufnahme 3 in die erste Endstellung zurück. Die an den Verriegelungsbügeln 10, 10' angeordneten Haken 11, 11' beschreiben jetzt eine bogenförmige Bewegung von der Kartenebene aus nach unten bis unterhalb der Kartenebene und geben dabei die Wertkarte 6 frei. In der ersten Endstellung kann die Wertkarte 6 der Vorrichtung entnommen werden.

Die beiden Mitnehmerstifte 12, 12' übertragen also die Bewegung der Kartenaufnahme 3 derart auf das jeweilige Hebelsystem 8, 9, 10 bzw. 8', 9', 10', dass die an den Verriegelungsbügeln 10, 10' angeordneten Haken 11, 11' in der ersten Endstellung die Wertkarte 6 freigeben und in der zweiten Endstellung die Wertkarte 6 hinterfassen.

Die Anordung von zwei Hebeln 8, 9 bzw. 8', 9' macht es möglich, dass die Haken 11, 11' relativ zur Kartenaufnahme 3 eine nicht kreisförmige Kurve beschreiben. Durch die Wahl der Länge der Hebel 8, 9 bzw. 8', 9' und des Abstandes der Anlenkungspunkte an den Verriegelungsbügeln 10, 10' kann die Kurvenform variiert werden.

Vorteilhafterweise sind die beiden Verriegelungsbügel 10, 10' derart an den beiden Hebeln 8, 9 bzw. 8', 9' angelenkt, dass die Haken 11, 11' bei einer Bewegung der Kartenaufnahme 3 von der ersten Endstellung in die zweite Endstellung eine Holbewegung hinter die Wertkarte 6 ausführen, d.h. dass die Haken 11, 11', kurz bevor die zweite Endstellung ganz erreicht ist, eine lineare Bewegung in der Einschubrichtung der Wertkarte 6 ausführen. Eine solche Anordnung behandelt die Wertkarte 6 auf besonders schonende Weise. Beschädigungen der Wertkarte 6 durch die Haken 11, 11' werden vermieden.

Es ist auch möglich, die beiden Hebelsysteme mit nur je einem Hebel, beispielsweise den Hebeln 8, 8', auszuführen. Die Verriegelungsbügel 10, 10' sind in diesem Fall an den Hebeln 8, 8' und an den Mitnehmern 12, 12' angelenkt. Bei einer Bewegung der Kartenaufnahme 3 von der ersten Endstellung in die zweite Endstellung beschreiben die Haken 11, 11' bei einer solchen Lösung eine kreisförmige Bewegung relativ zur Kartenaufnahme 3 von unterhalb der Kartenebene gegen die Kartenebene zu. Dies ist eine besonders einfache und kostengünstige Lösung, da nur wenige Bauteile notwendig sind.

Mit der Druckfeder 7 ist ein Energiespeicher angeordnet, der beim manuellen Einschieben der Kartenaufnahme 3 von der ersten Endstellung in die zweite Endstellung geladen wird und nach der Freigabe der Kartenaufnahme 3 durch die Arretierungsvorrichtung die Kartenaufnahme 3 von der zweiten Endstellung selbsttätig in die erste Endstellung zurückbewegt.

Bei der beschriebenen Vorrichtung ist die Verriegelung der Wertkarte 6 zwangsgesteuert. Ein versehentliches oder auch gewolltes Herausziehen der Wertkarte 6 während des Lese- und Schreibvorganges ist nicht möglich. Zur Verriegelung sind keine motorischen Mittel nötig. Die Vorrichtung wird dadurch einfach und kostengünstig. Die Bedienung der Vorrichtung ist dabei einfach. Es ist beispielsweise möglich, eine Wertkarte 6 in die Vorrichtung einzuschieben, sie lesen und beschreiben zu lassen und anschliessend aus der Vorrichtung herauszuziehen, ohne dass die Wertkarte 6 aus der Hand gegeben und ohne dass an der Vorrichtung manipuliert werden muss. Die Vorrichtung ist universell verwendbar, d.h. anstelle der Kontaktierungsvorrichtung 14 kann auch eine entsprechende Lese- und Schreibvorrichtung für optisch oder magnetisch codierte Wertkarten eingesetzt werden.

Sind das Gehäuse 2 und die Kartenaufnahme 3 nach unten offen ausgestaltet, so werden eingeführte Fremdkörper, die nicht dem Format der Wertkarte 6 entsprechen, nach unten ausgegeben. Damit ist ein Verstopfen der Vorrichtung erschwert.

Neben dem Schalter 13, der die Stellung der Kartenaufnahme 3 überwacht, können weitere Schalter angeordnet sein, die beispielsweise die korrekte Lage der Wertkarte 6 überwachen. Diese weiteren Schalter sind mit dem Schalter 13 in einer UND-Funktion verknüpft und mit dem Steuergerät 16 verbunden. Ein Lese- und Schreibvorgang wird nur dann freigegeben, wenn alle Schalter in der entsprechenden vorbestimmten Stellung sind.

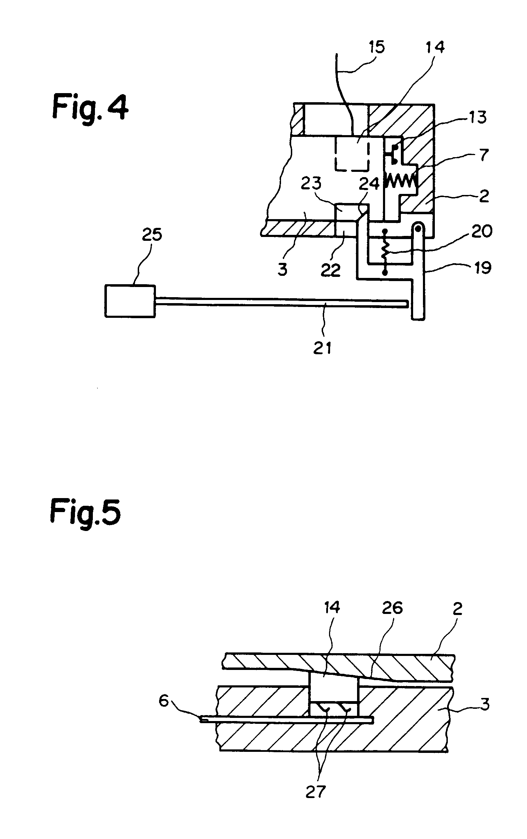

In der Fig. 4 ist eine Klinke 19 in einem Schlitz 22 am hinteren Ende des Gehäuses 2 drehbar angeordnet. Eine Feder 20 zieht die Klinke 19 nach oben, d.h. gegen die Kartenaufnahme 3. In der zweiten Endstellung ist die Klinke 19 in einer Oeffnung 23 in der Kartenaufnahme 3 eingeschnappt und hält die Kartenaufnahme 3 fest. An der Klinke 19 ist eine gegen die Kartenaufnahme 3 gerichtete Anlaufschräge 24 angeordnet. Ein Stössel 21 ist von einem in der Frontplatte 1 (Fig. 1) angeordneten Knopf 25 verschiebbar und bewegt dabei die Klinke 19 entgegen der Kraft der Feder 20.

Beim Verschieben der Kartenaufnahme 3 von der ersten Endstellung in die zweite Endstellung läuft die Kartenaufnahme 3 kurz vor dem Erreichen der zweiten Endstellung auf die Anlaufschräge 24 auf. Die Klinke 19 wird dadurch entgegen der Kraft der Feder 20 nach unten gedrückt. Sobald die Kartenaufnahme 3 die zweite Endstellung ganz erreicht hat, schnappt die Klinke 19 in die Oeffnung 23 in der Kartenaufnahme 3 ein und hält die Kartenaufnahme 3 in der zweiten Endstellung fest. Durch manuellen Druck auf den in der Frontplatte 1 gelagerten Knopf 25 wird der Stössel 21 verschoben. Dieser bewegt die Klinke 19 entgegen der Kraft der Feder 20 und gibt somit die Kartenaufnahme 3 frei. Durch die Kraft der Druckfeder 7 wird die Kartenaufnahme 3 in die erste Endstellung zurückbewegt.

Für den Betrieb einer solchen Vorrichtung sind keine elektromagnetischen Mittel notwendig. Sie stellt somit eine besonders einfache und kostengünstige Lösung dar.

Für bestimmte Anwendungen kann es auch vorteilhaft sein, eine Auslösung der Kartenaufnahme 3 durch einen Elektromagneten 18 und eine Auslösung durch einen manuell zu betätigenden Stössel 21 zu kombinieren.

In der Fig. 5 ist die Kontaktierungsvorrichtung 14 in einer Aussparung der Kartenaufnahme 3 derart eingelegt, dass sie in der Bewegungsrichtung der Kartenaufnahme 3 von dieser mitgenommen wird, in senkrechter Richtung zur Bewegungsrichtung aber verschiebbar ist. Die Kontaktierungsvorrichtung 14 wird von einer nicht gezeichneten Feder gegen eine im Gehäuse 2 angeordnete geneigte Fläche 26 gepresst, die so ausgebildet ist, dass Kontaktfedern 27 in der ersten Endstellung von der Wertkarte 6 abgehoben und in der zweiten Endstellung mit der Wertkarte 6 in Verbindung sind.

Beim Verschieben der Kartenaufnahme 3 von der ersten in die zweite Endstellung gleitet die Kontaktierungsvorrichtung 14 entlang der geneigten Fläche 26. Sie wird entgegen der Federkraft gegen die Wertkarte 6 bewegt. Kurz bevor die zweite Endstellung erreicht ist, setzen die Kontaktfedern 27 auf den Kontaktflächen der Wertkarte 6 auf.

Dadurch, dass die Kontaktfedern 27 erst kurz vor dem Erreichen der zweiten Endstellung mit den Kontaktflächen der Wertkarte 6 in Berührung kommen, werden sowohl die Kontaktfedern 27 als auch die Kontaktflächen auf der Wertkarte 6 geschont. Damit wird die Lebensdauer sowohl der Vorrichtung als auch der Wertkarte 6 verlängert. Dadurch, dass die Kontaktfedern 27 nicht über die Wertkarte 6 gleiten, wird auch ein Zerkratzen der Wertkarte 6 vermieden.

Als vorteilhafte Weiterbildung können die Kontaktfedern 27 als schräggeneigte Blattfedern ausgebildet sein, die nach der ersten Berührung mit der Wertkarte 6 durchgebogen werden und dabei eine Relativbewegung zur Wertkarte 6 machen. Schmutzteile auf der Kontaktierungsfläche der Wertkarte 6 werden dadurch zur Seite geschoben und allfällige Oxydschichten auf der Kontaktierungsfläche werden aufgebrochen. Eine sichere Kontaktierung ist damit möglich.

Die beschriebene Vorrichtung zum Lesen und Beschreiben von Wertkarten bietet einige Vorteile. Sie ist vom Benutzer einfach zu bedienen. Das Einführen der Wertkarte 6 in die Kartenaufnahme 3 und das Verschieben derselben von der ersten Endstellung in die zweite Endstellung geschieht im gleichen Bewegungsablauf, also sozusagen automatisch. In der zweiten Endstellung ist die Wertkarte 3 gegen ein ungewolltes oder auch gewolltes Herausziehen gesichert. Die Kontaktierungsvorrichtung 14 ist so ausgebildet, dass sowohl die Kontaktfedern 27 als auch die Wertkarte 6 geschont werden. Nach der Beendigung des Lese- und Schreibvorganges wird die Wertkarte 6 automatisch aus dem Einführschlitz 5 ausgegeben, ohne dass dazu ein motorischer Antrieb notwendig wäre. Trotz dieser vorteilhaften Ausbildungen ist die Vorrichtung einfach und robust aufgebaut. Sie ist daher kostengünstig sowohl in der Herstellung als auch im Betrieb.

## Patentansprüche

1. Vorrichtung zum Lesen und Beschreiben von Wertkarten(6),
mit einer manuell verschiebbaren Kartenaufnahme (3), die in einem Gehäuse (2) geführt ist und die zwei Endstellungen aufweist, wobei in der ersten Endstellung die Wertkarte (6) in die Kartenaufnahme (3) eingeführt und entnommen werden kann und in der zweiten Endstellung die Wertkarte (6) durch eine Lese- und Schreibeinrichtung (16) les- und beschreibbar ist,
mit einem Hebelsystem (8, 9, 10; 8', 9', 10'), das mindestens eine am Gehäuse (2) drehbar angeordnete Gruppe von Hebeln (8, 9 bzw 8', 9') mit je einem Verriegelungsbügel (10; 10') aufweist, und
mit einem Mitnehmer (12, 12'), der mit der Kartenaufnahme (3) verbunden ist und der die Bewegung der Kartenaufnahme (3) derart auf das Hebelsystem (8, 9, 10; 8', 9', 10') überträgt, daß ein am jeweiligen einen Ende des Verriegelungsbügels (10; 10') angeordneter Haken (11; 11') in der ersten Endstellung die Wertkarte (6) freigibt und in der zweiten Endstellung die Wertkarte (6) verriegelt,
**dadurch gekennzeichnet,**
daß die Gruppe bzw. die Gruppen von Hebeln (8', 9' bzw. 8, 9) jeweils zwei Hebel (8', 9' bzw. 8, 9) aufweisen, daß die zwei Hebel (8', 9' bzw. 8, 9) durch den entsprechenden Verriegelungsbügel (10; 10') miteinander gekoppelt sind, wobei
der erste Hebel (8, 8') mit dem Gehäuse (2) und zwischen den Enden des Verriegelungsbügels (10; 10') mit dem Verriegelungsbügel (10; 10') und der zweite Hebel (9, 9') mit dem Gehäuse (2) und dem anderen hakenfreien Ende des Verriegelungsbügels (10, 10') gelenkig verbunden sind, und
daß der entsprechende Verriegelungsbügel (10; 10') derart durch die Hebel (8, 9; 8', 9') angelenkt ist, daß der Haken (11; 11') bei einer Bewegung der Kartenaufnahme (3) von der ersten Endstellung in die zweite Endstellung eine Bewegung ausführt, die erst nahezu kreisförmig ist und kurz vor Erreichen der zweiten Endstellung nahezu gerade und parallel zu der Einschubrichtung der Wertkarte (6) erfolgt.

2. Vorrichtung nach Anspruch 1,
dadurch gekennzeichnet, daß
eine Arretierungsvorrichtung (17, 18; 19 bis 25) die Kartenaufnahme (3) in der zweiten Endstellung festhält.

3. Vorrichtung nach Anspruch 2,
dadurch gekennzeichnet, daß
die Arretierungsvorrichtung aus einem Stössel (17) besteht, der in eine in der Kartenaufnahme (3) angeordnete Öffnung eingreift und von einem Elektromagneten (18) bewegbar ist.

4. Vorrichtung nach Anspruch 2,
dadurch gekennzeichnet, daß
die Arretierungsvorrichtung aus einer Klinke (19) besteht, die in der zweiten Endstellung in eine in der Kartenaufnahme (3) angeordnete Öffnung (23) eingreift und durch die Kartenaufnahme (3) bewegbar ist.

5. Vorrichtung nach Anspruch 2 oder 4,
dadurch gekennzeichnet, daß
die Arretierungsvorrichtung aus einer Klinke (19) besteht, die in der zweiten Endstellung in eine in der Kartenaufnahme (3) angeordnete Öffnung (23) einschnappt und manuell mit Mitteln (21, 25), entgegen der Kraft einer Feder (20), bewegbar ist.

6. Vorrichtung nach einem der vorhergehenden Ansprüche,
dadurch gekennzeichnet, daß
ein Energiespeicher (7) angeordnet ist, der beim manuellen Einschieben der Kartenaufnahme (3) von der ersten Endstellung in die zweite Endstellung geladen wird und nach der Freigabe der Kartenaufnahme (3) durch die Arretierungsvorrichtung (17, 18; 19 bis 25) die Kartenaufnahme (3) von der zweiten Endstellung selbsttätig in die erste Endstellung zurückbewegt.

7. Vorrichtung nach einem der vorhergehenden Ansprüche,
dadurch gekennzeichnet, daß
die Kontaktierungsvorrichtung (14) in der Kartenaufnahme (3) derart geführt ist, daß sie in der Bewegungsrichtung der Kartenaufnahme (3) von dieser mitgenommen wird, in senkrechter Richtung zur Bewegungsrichtung aber verschiebbar ist, und daß die Kontaktierungsvorrichtung (14) derart gegen eine geneigte Fläche (26) gepresst wird, daß die Kontaktierungsvorrichtung (14) in der ersten Endstellung von der Wertkarte (6) abgehoben und in der zweiten Endstellung mit der Wertkarte (6) in Verbindung ist.

8. Vorrichtung nach einem der vorhergehenden Ansprüche,
dadurch gekennzeichnet, daß
eine Kontaktierungsvorrichtung (13) die Stellung und/oder die korrekte Lage der Kartenaufnahme (3) überwacht und ein entsprechendes Signal an ein Steuergerät (16) weitergibt.

## Claims

1. Apparatus for reading and writing value cards (6) comprising
a manually displaceable card receiving means (3) which is guided in a housing (2) and which has two end positions, wherein in the first end position the value card (6) can be introduced into and removed from the card receiving means (3) and in the second end position the value card (6) is readable and writable by a reading and writing device (16),
a lever system (8, 9, 10; 8', 9', 10') which has at least one group, arranged rotatably on the housing (2), of levers (8, 9 and 8', 9' respectively) each having a respective locking bar (10; 10'), and
an entrainment means (12, 12') which is connected to the card receiving means (3) and which transmits the movement of the card receiving means (3) to the lever system (8, 9, 10; 8', 9', 10') in such a way that a hook (11; 11') arranged at the respective one end of the locking bar (10; 10') releases the value card (6) in the first end position and locks the value card (6) in the second end position,
characterised in that
the group or groups of levers (8', 9' and 8, 9 respectively) each have two levers (8', 9' and 8, 9 respectively),
the two levers (8', 9' and 8, 9 respectively) are coupled together by the corresponding locking bar (10; 10'), wherein
the first lever (8, 8') is pivotably connected to the housing (2) and between the ends of the locking bar (10; 10') to the locking bar (10; 10') and the second lever (9, 9') is pivotably connected to the housing (2) and the other hook-free end of the locking bar (10, 10'), and
the corresponding locking bar (10; 10') is pivoted by the levers (8, 9; 8', 9') in such a way that, upon a movement of the card receiving means (3) from the first end position into the second end position the hook (11; 11') performs a movement which is initially almost circular and which shortly before the second end position is reached is almost straight and parallel to the direction of insertion of the value card (6).

2. Apparatus according to claim 1 characterised in that an arresting device (17, 18; 19 to 25) holds the card receiving means (3) fast in the second end position.

3. Apparatus according to claim 2 characterised in that the arresting device comprises a push rod (17) which engages into an opening disposed in the card receiving means (3) and is movable by a solenoid (18).

4. Apparatus according to claim 2 characterised in that the arresting device comprises a pawl (19) which in the second end position engages into an opening (23) disposed in the card receiving means (3) and is movable by the card receiving means (3).

5. Apparatus according to claim 2 or claim 4 characterised in that the arresting device comprises a pawl (19) which in the second end position snaps into an opening (23) arranged in the card receiving means (3) and is movable manually by means (21, 25) against the force of a spring (20).

6. Apparatus according to one of the preceding claims characterised in that there is provided an energy storage means (7) which is loaded when the card receiving means (3) is manually pushed in from the first end position into the second end position and which after release of the card receiving means (3) by the arresting device (17, 18; 19 to 25) automatically moves the card receiving means (3) from the second end position back into the first end position.

7. Apparatus according to one of the preceding claims characterised in that the contacting device (14) is guided in the card receiving means (3) in such a way that it is entrained by the card receiving means (3) in the direction ot movement thereof but it is displaceable in a perpendicular direction relative to the direction of movement, and that the contacting device (14) is pressed against an inclined surface (26) in such a way that the contacting device (14) is lifted off the value card (6) in the first end position and is connected to the value card (6) in the second end position.

8. Apparatus according to one of the preceding claims characterised in that a contacting device (13) monitors the position and/or the correct location of the card receiving means (3) and transmits a corresponding signal to a control unit (16).

## Revendications

1. Dispositif pour lire des cartes de crédit (6) et marquer une inscription sur ces dernières, comportant
un logement (3) pour cartes déplaçable manuellement, qui est guidé dans un boîtier (2) et a deux positions d'extrémité, dans lequel dans la première position d'extrémité la carte de crédit (6) peut être introduite et retirée dans le logement (3) pour cartes et, dans la seconde position d'extrémité, la carte de crédit (6) peut être lue et une inscription peut y être marquée au moyen d'un dispositif de lecture et d'écriture (6),
un système à leviers (8, 9, 10 ; 8', 9', 10'), qui possède au moins un groupe, monté de manière à pouvoir tourner dans le boîtier (2), de leviers (8, 9 ou 8', 9') possédant chacun un étrier de verrouillage (10 ; 10'), et
un organe d'entraînement (12 ; 12'), qui est relié au logement (3) de réception de la carte et transmet le déplacement du logement (3) pour cartes au système à leviers (8, 9, 10 ; 8', 9', 10') de telle sorte que dans une première position d'extrémité, un crochet (11 ; 11') disposé sur une extrémité respective de l'étrier de verrouillage (10 ; 10') libère la carte de crédit (6) et, dans la seconde position d'extrémité, bloque la carte de crédit (6),
caractérisé en ce
que le ou les groupes de leviers (8', 9' ou 8, 9) comportent chacun deux leviers (8', 9' ou 8, 9),
que les deux leviers (8', 9' ; 8, 9) sont couplés entre eux par l'étrier correspondant de verrouillage (10 ; 10'),
le premier levier (8 ; 8') étant relié de façon articulée au boîtier (2) et à l'étrier de verrouillage (10 ; 10') entre les deux extrémités de cet étrier de verrouillage (10 ; 10') et le second levier (9 ; 9') étant relié de façon articulé au boîtier (2) et à l'autre extrémité sans crochet de l'étrier de verrouillage (10 ; 10'), et
que l'étrier de verrouillage correspondant (10, 10') est articulé au moyen des leviers (8, 9 ; 8', 9') de telle sorte que dans le cas d'un déplacement du logement (3) pour cartes depuis la première position d'extrémité dans la seconde position d'extrémité, le crochet (11 ; 11') exécute un déplacement qui est presque circulaire et qui s'effectue, peu avant que soit atteinte la seconde position d'extrémité, d'une manière rectiligne et parallèlement à la direction d'insertion de la carte de crédit (6).

2. Dispositif selon la revendication 1, caractérisé en ce qu'un dispositif d'arrêt (17, 18 ; 19 à 25) maintient fermement le logement (3) pour cartes dans la seconde position d'extrémité.

3. Dispositif selon la revendication 2, caractérisé en ce que le dispositif d'arrêt est constitué par un poussoir (17), qui s'engage dans une ouverture formée dans le logement (3) pour cartes et est déplaçable par un électroaimant (18).

4. Dispositif selon la revendication 2, caractérisé en ce que le dispositif d'arrêt est constitué par un cliquet (19) qui, dans la seconde position, s'engage dans une ouverture (23) formée dans le logement (3) pour cartes et peut être déplacé par le logement (3) pour cartes.

5. Dispositif selon la revendication 2 ou 4, caractérisé en ce que le dispositif d'arrêt est constitué par un cliquet (19), qui dans la seconde position d'extrémité, s'encliquette dans une ouverture (23) formée dans le logement (3) pour cartes et peut être actionné manuellement à l'aide de moyens (21, 25) à l'encontre de la force d'un ressort (20).

6. Dispositif selon l'une des revendications précédente, caractérisé en ce qu'il est prévu un accumulateur d'énergie (7) qui, lors de l'insertion manuelle du logement (3) pour cartes, est chargé depuis la première position d'extrémité dans la seconde position d'extrémité et qu'après libération du logement (3) pour cartes par le dispositif d'arrêt (17, 18 ; 19 à 25), le logement (3) pour cartes est ramené automatiquement de la seconde position d'extrémité dans la première position d'extrémité.

7. Dispositif selon l'une des revendications précédentes, caractérisé en ce que le dispositif de contact (14) est guidé dans le logement (3) pour cartes de telle sorte qu'il est entraîné simultanément par le logement (3) pour cartes, dans la direction de déplacement de ce dernier, mais est déplaçable dans une direction perpendiculaire à la direction de déplacement, et que le dispositif de contact (14) est repoussé contre une surface inclinée (26) de telle sorte que dans la première position d'extrémité, le dispositif de contact (14) est écarté de la carte de crédit (6) et, dans la seconde position d'extrémité, est relié à la carte de crédit (6).

8. Dispositif selon l'une des revendications précédentes, caractérisé en ce qu'un dispositif de contact (13) contrôle l'attitude et/ou la position correcte du logement (3) pour cartes et transmet un signal correspondant à un appareil de commande (16).
